# FASCICULE DE BREVET EUROPEEN

(11) **EP 3 790 772 B1**
(45) Date de publication et mention de la délivrance du brevet: **15.06.2022**
(21) Numéro de dépôt: 19716156.5
(22) Date de dépôt: 09.04.2019
(51) Int. Cl.: B60S 1/38, G07C 5/08

(54) **DISPOSITIF D'AVERTISSEMENT À DISTANCE DE L'ÉTAT D'USURE D'AU MOINS UN BALAI D'UN SYSTÈME D'ESSUIE-GLACE**
VORRICHTUNG ZUR FERNWARNUNG ÜBER DEN VERSCHLEISSZUSTAND VON MINDESTENS EINEM WISCHBLATT EINER SCHEIBENWISCHERANLAGE
DEVICE FOR REMOTE WARNING ABOUT THE STATE OF WEAR OF AT LEAST ONE WIPER BLADE OF A WINDSCREEN-WIPING SYSTEM

(30) Priorité: 07.05.2018 FR 1853910
(43) Date de publication de la demande: 17.03.2021
(73) Titulaire: Valeo Systèmes d'Essuyage, 78322 Le Mesnil Saint Denis (FR)
(72) Inventeur: GIRAUD, Frédéric, 78322 LE MESNIL SAINT DENIS (FR); IMBERT, Laure, 93285 saint denis (FR); POTON, Eric, 63500 ISSOIRE (FR); COQUET, Damien, 78322 LE MESNIL SAINT DENIS (FR)
(74) Mandataire: Valeo Visibility
(86) Numéro de dépôt international: PCT/EP2019/058875
(87) Numéro de publication internationale: WO 2019/214886

(56) Documents cités:
- EP-A1- 2 393 014
- WO-A1-2012/159943
- DE-U1-202017 106 704
- FR-A1- 3 056 785
- US-B1- 9 520 006

## Description

### DOMAINE TECHNIQUE DE L'INVENTION

La présente invention concerne un dispositif d'avertissement à distance de l'état d'usure d'au moins un balai d'un système d'essuie-glace d'un véhicule.

### ARRIERE PLAN TECHNIQUE DE L'INVENTION

Le remplacement des balais d'essuie-glace d'un véhicule repose sur un équilibre entre le confort de vision du conducteur en condition pluvieuse et le coût du remplacement des balais. Le maintien des balais, dans la mesure où la visibilité est largement impactée, pourrait amener le conducteur à une vision dégradée en cas de pluie et augmente le risque d'accident en raison de la perte de visibilité.

Plusieurs solutions pour détecter l'état d'usure des balais d'essuie-glace d'un véhicule sont connues.

Une première solution consiste à compter le nombre de cycles de balayage des balais d'essuie-glace et d'informer l'utilisateur lorsqu'une limite de durée de vie prédéterminée représentative d'un état d'usure inacceptable est atteinte, la limite de durée de vie correspondant à un seuil prédéterminé de cycles de balayage des balais d'essuie-glace. Toutefois, cette méthode ne tient pas compte des facteurs environnementaux tels que l'exposition à la lumière ultraviolette, la température et les conditions météorologiques.

Une autre solution connue est de surveiller l'usure de l'essuie-glace au moyen d'un capteur optique avec lequel le pare-brise est scanné avant et après l'opération d'essuyage. Cependant, le capteur optique ne peut surveiller qu'une partie du pare-brise de sorte que, les données ne pouvant être recueillies que sur une petite partie de l'essuie-glace, l'évaluation de l'état d'usure n'est pas très fiable.

Une autre solution connue est de fixer un élément d'usure fabriqué à partir du même matériau que le balai d'essuie-glace sur la structure de support du balai d'essuie-glace. L'élément d'usure est soumis aux mêmes conditions de fonctionnement et d'environnement que l'essuie-glace et, lorsque la durée prédéterminée d'efficacité du balai d'essuie-glace est atteinte, une section de l'élément d'usure se brise pour révéler des moyens d'indication qui informent le conducteur qu'il doit changer le balai d'essuieglace. Cependant, cette méthode nécessite la fabrication de balais d'essuieglace spécifique qui est habituellement complexe.

Afin de palier ces inconvénients, on a déjà imaginé un procédé et un dispositif pour estimer l'usure des balais d'essuie-glace tenant compte de l'état d'usure de la totalité du balai d'essuie-glace et ne nécessitant pas l'ajout de matériel complexe. C'est le cas de la demande de brevet internationale WO2012/159943 notamment.

Le document WO2012/159943 décrit un procédé pour estimer l'état d'usure des balais d'essuie-glace d'une unité d'essuie-glace de véhicule, dans lequel ladite unité d'essuie-glace comprend au moins un balai d'essuie-glace configuré pour essuyer une surface de pare-brise lorsqu'elle est activée, au moins un moteur configuré pour activer ledit balai d'essuie-glace à une vitesse d'essuyage déterminée, et un contrôleur configuré pour commander ledit moteur. Le procédé consiste à déduire ou estimer un coefficient de frottement entre ledit balai d'essuie-glace et la surface du pare-brise et à comparer le coefficient de frottement déduit ou estimé à une première valeur de seuil prédéterminée, pour déterminer l'humidité de la surface du pare-brise et, si la surface du pare-brise est sèche, à comparer le coefficient de frottement déduit ou estimé à une seconde valeur de seuil prédéterminée afin d'estimer l'état d'usure dudit balai d'essuie-glace. Le procédé comprend une étape consistant à générer un signal d'alerte sur le tableau de bord du véhicule lorsque l'au moins un balai d'essuie-glace est estimé usé.

Ce type de procédé, bien qu'efficace, présente l'inconvénient de ne pas être adapté à tous les véhicules automobiles notamment en « deuxième monte » dans la mesure où le véhicule doit comprendre le contrôleur paramétré pour déduire ou estimer le coefficient de frottement entre ledit balai d'essuie-glace et la surface du pare-brise et comparer le coefficient de frottement déduit ou estimé à une première valeur de seuil prédéterminée et/ou une seconde valeur de seuil prédéterminée, ainsi que les moyens de signalisation de l'usure connectés audit contrôleur.

L'invention vise donc à proposer une solution simple, efficace et économique à ce besoin, qui soit applicable à tout véhicule automobile, notamment en « deuxième monte ».

### BREF RESUME DE L'INVENTION

A cet effet, et conformément à l'invention, il est proposé un dispositif d'avertissement à distance de l'état d'usure d'au moins un balai d'un système d'essuie-glace d'un véhicule comprenant des moyens de détermination de l'usure dudit balai et des moyens de signalisation de ladite usure ; ledit dispositif est remarquable en ce qu'il comprend au moins un boitier comprenant un module dit connecteur de diagnostic amovible apte à coopérer avec un connecteur de service de diagnostic formant une entrée de diagnostic embarquée du véhicule pour établir une liaison avec ledit connecteur de diagnostic par l'intermédiaire du protocole OBD et des moyens de communication électronique couplés avec le connecteur de diagnostic et aptes à transmettre à un appareil électronique portable, par une liaison sans fil, un message indiquant l'usure dudit balai lorsque les moyens de détermination de l'usure du balai génèrent un signal dit d'usure.

Ledit message peut alors être affiché sur ledit appareil électronique.

On comprend bien que le dispositif suivant l'invention présente l'avantage d'être autonome et d'être connecté au système de diagnostic embarqué OBD, notamment OBD II ou EOBD, qui est présent sur tous les véhicules de sorte qu'il peut être mis en place en « deuxième monte » sur tous les véhicules.

Lesdits moyens de détermination de l'usure dudit balai consistent par exemple en un contrôleur du véhicule connecté à l'entrée de diagnostic embarquée du véhicule.

Selon une variante d'exécution, lesdits moyens de détermination de l'usure dudit balai sont intégrés dans ledit boitier et sont connectés aux moyens de communication électronique.

Ces moyens de détermination de l'usure du ou des balais comprennent par exemple des moyens pour générer le signal d'usure en fonction du nombre de cycles de balayage du ou des balais d'essuie-glace.

Alternativement, les moyens de détermination de l'usure du balai comprennent des moyens pour déduire ou estimer un coefficient de frottement entre le ou les balais d'essuie-glace et la surface du pare-brise et des moyens pour générer un signal d'usure en fonction dudit coefficient de frottement et du nombre de cycles de balayage du ou des balais d'essuie-glace.

Par ailleurs, les moyens de communication électronique consistent par exemple en un transmetteur bluetooth^{®} générant une communication selon le protocole bluetooth^{®} avec l'appareil électronique et/ou en un transmetteur générant une communication selon le protocole IEEE 802.11p avec l'appareil électronique et/ou en un transmetteur GSM et/ou GPRS générant une communication téléphonique avec un serveur distant.

De plus, l'appareil électronique portable consiste par exemple en un téléphone intelligent dit smartphone ou dans une tablette tactile ou similaire.

Accessoirement, le message transmis audit appareil électronique comporte un lien hypertexte.

### BREVE DESCRIPTION DES FIGURES

D'autres avantages et caractéristiques ressortiront mieux de la description qui va suivre, donnée à titre d'exemple non limitatif, du dispositif d'avertissement à distance de l'état d'usure d'au moins un balai d'un système d'essuie-glace suivant l'invention, à partir des dessins annexés sur lesquels :
- la figure 1 est une représentation schématique du dispositif d'avertissement à distance de l'état d'usure d'au moins un balai d'un système d'essuie-glace suivant l'invention,
- la figure 2 est une représentation schématique en perspective du boitier du dispositif d'avertissement à distance de l'état d'usure d'au moins un balai d'un système d'essuie-glace suivant l'invention apte à se connecter sur l'OBD du véhicule,
- la figure 3 est une représentation schématique en perspective du boitier du dispositif d'avertissement à distance de l'état d'usure d'au moins un balai d'un système d'essuie-glace suivant l'invention connecté sur l'OBD du véhicule.

### DESCRIPTION DETAILLEE DES FIGURES

Dans la suite de la description, des éléments présentant une structure identique ou des fonctions analogues seront désignés par des mêmes références.

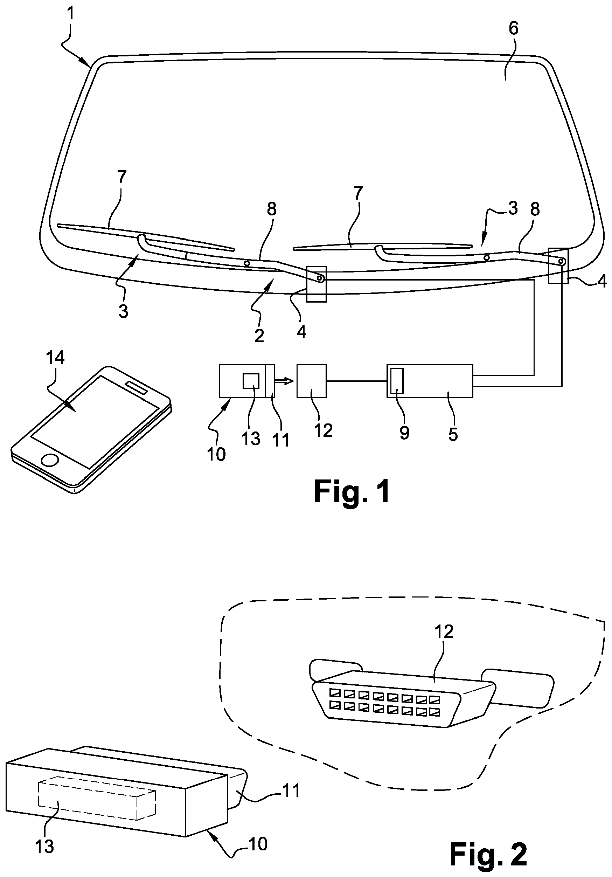

Dans l'exemple de réalisation de l'invention illustré à la figure 1, cette dernière représente schématiquement un pare-brise 1 et un système d'essuieglace associé 2 qui comprend par exemple un ensemble de balais 3, au moins un moteur 4 et un contrôleur 5.

Le pare-brise 1 comprend une surface de pare-brise externe 6 qui reçoit la pluie ou des salissures, tels que des impacts d'insectes par exemple, lorsque le véhicule est en mouvement. Sur ladite surface de pare-brise 6 est placé au moins un ensemble de balais 3 d'essuie-glace. Usuellement, l'ensemble de balais 3 comprend deux balais d'essuie-glace 7, un balai conducteur et un balai passager, montés à l'extrémité de bras d'essuie-glace 8 entraînés en rotation par des moteurs respectifs 4. Dans cet exemple particulier de réalisation, seuls les balais d'essuie-glace 7 sont en contact avec la surface de pare-brise 6.

On observera que, dans cet exemple particulier de réalisation, le système d'essuie-glace 2 comporte deux balais d'essuie-glace 3, un balai conducteur et un balai passager ; toutefois, il est bien évident que ledit système d'essuie-glace 2 pourra ne comporter qu'un seul balai d'essuie-glace et/ou intégrer le balai d'essuie-glace de la lunette arrière sans pour autant sortir du cadre de l'invention.

Le système d'essuie-glace 2 est usuellement contrôlé par un utilisateur via un comodo, non représenté sur la figure 1, ou toute autre forme d'actionneur équivalent bien connu de l'homme du métier, un tel actionneur pouvant être dans l'habitacle du véhicule, le plus souvent près du volant ou du tableau de bord.

Le système d'essuie-glace 2 peut également être commandé automatiquement par un capteur de pluie. Ledit capteur de pluie, non représenté sur la figure 1, consiste généralement en un capteur optique placé sur la surface du pare-brise 6, ledit capteur utilisant la dispersion infrarouge et la réflexion des rayons infrarouges à l'intérieur du pare-brise 3 pour déterminer la présence ou l'absence de pluie sur la surface de pare-brise 6.

De manière usuelle, plusieurs vitesses de balayage ou des programmes prédéterminés sont disponibles, à savoir désactivé, balayage unique, INT intermittent, LS à faible vitesse et HS à haute vitesse. Pour alimenter les moteurs 4 entraînant l'ensemble de balais 3, le contrôleur 5 utilise une modulation de largeur d'impulsion sur le courant délivré auxdits moteurs 4.

Lesdits moteurs 4 sont aptes à mettre en mouvement l'ensemble de balais 3 en appliquant un couple à la base de l'ensemble de balais 3. Lesdits moteurs 4 sont alimentés en énergie électrique via le contrôleur 5 qui est configuré pour appliquer des programmes de balayage spécifiques en contrôlant la vitesse de balayage de l'ensemble de balais 3. Ladite énergie électrique est délivrée par la batterie du véhicule ou par un alternateur du véhicule.

Alternativement, on pourrait prévoir d'avoir un contrôleur 5 pour chaque moteur 4.

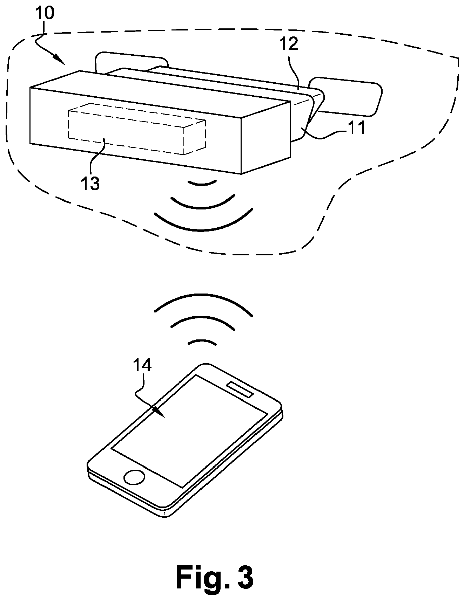

Le dispositif de détection de l'usure des balais d'essuie-glace suivant l'invention, en référence aux figures 1 à 3, comprend d'une part des moyens 9 de détermination de l'usure dudit ou desdits balais 7 et d'autre part un boitier 10 comprenant un module dit connecteur de diagnostic amovible 11 apte à coopérer avec un connecteur de service de diagnostic 12 formant une entrée de diagnostic embarquée du véhicule pour établir une liaison avec ledit connecteur de diagnostic 11 par l'intermédiaire du protocole OBD et de moyens de communication électronique 13 couplés avec le connecteur de diagnostic 11 et aptes à transmettre à un appareil électronique portable 14, par une liaison sans fil, un message indiquant l'usure desdits balais 7 lorsque les moyens 9 de détermination de l'usure des balais 7 génèrent un signal dit d'usure, ledit message pouvant être affiché sur ledit appareil électronique 14.

Le dispositif suivant l'invention présente l'avantage d'être autonome et d'être connecté au système de diagnostic embarqué OBD, notamment OBD II ou EOBD, qui est présent sur tous les véhicules de sorte qu'il peut être mis en place en « deuxième monte » sur tous les véhicules. On entend par système de diagnostic embarqué OBD, notamment OBD II ou EOBD, la norme OBD (pour On Board Diagnostic) initialement mise en place par la CARB (Californian Air Resources Board) et instaurée comme standard depuis la norme EURO3 et la directive européenne 98/69/EC telles qu'existantes au mois d'avril 2018. Cette norme stipule que le système OBD comporte un connecteur de service de diagnostic qui doit obligatoirement se situer dans l'habitacle. Généralement celui-ci se trouve sous le volant dans le compartiment à fusibles ou sous le cendrier près du frein à main.

Alternativement, lesdits moyens 9 de détermination de l'usure desdits balais 7 consistent dans le contrôleur 5 du véhicule qui est connecté à l'entrée du connecteur de service de diagnostic embarqué du véhicule. Par exemple, les moyens 9 de détermination de l'usure des balais 7 comprennent des moyens pour déduire ou estimer un coefficient de frottement entre le ou les balais d'essuie-glace et la surface du pare-brise et des moyens pour générer un signal d'usure en fonction dudit coefficient de frottement et du nombre de cycles de balayage du ou desdits balais d'essuie-glace tels que ceux décrits dans la demande de brevet internationale WO2012/159943 à laquelle l'homme du métier pourra se référer.

Par ailleurs, les moyens de communication électronique 13 consistent en un transmetteur bluetooth^{®} générant une communication selon le protocole bluetooth^{®} avec l'appareil électronique 14 et/ou en un transmetteur générant une communication selon le protocole IEEE 802.11p avec l'appareil électronique 14 et/ou en un transmetteur GSM et/ou GPRS générant une communication téléphonique avec un serveur distant, non représenté sur les figures, ledit serveur transmettant le message d'usure au dispositif électronique 14 par le réseau téléphonique ou par tout réseau sans fil connu de l'homme du métier.

Ledit appareil électronique 14 portable consiste par exemple en un téléphone intelligent dit smartphone ou dans une tablette tactile ou similaire.

Ainsi, le boitier 10 est connecté au connecteur de service de diagnostic 12 au moyen de son connecteur de diagnostic amovible 11 du système OBD du véhicule et il génère un message d'usure qui est transmis à l'appareil électronique 14 portable via les moyens de communication électronique 13. Accessoirement, ledit message transmis audit appareil électronique 14 comporte avantageusement un lien hypertexte renvoyant vers un site internet marchand proposant les références de balais 7 appropriées au véhicule de sorte que l'utilisateur est en mesure de requérir de nouveaux balais 7 dès la réception du message d'usure.

Selon une variante d'exécution, non représentée sur les figures, lesdits moyens 9 de détermination de l'usure desdits balais 7 pourront être intégrés dans ledit boitier 10 et seront alors connectés aux moyens de communication électronique 13.

## Revendications

1. Dispositif d'avertissement à distance de l'état d'usure d'au moins un balai (7) d'un système d'essuie-glace (2) d'un véhicule comprenant des moyens (9) de détermination de l'usure dudit balai (7) et des moyens de signalisation de ladite usure, ***caractérisé* en ce qu'**il comprend au moins un boitier (10) comprenant un module dit connecteur de diagnostic amovible (11) apte à coopérer avec un connecteur de service de diagnostic (12) formant une entrée de diagnostic embarquée du véhicule pour établir une liaison avec ledit connecteur de diagnostic (11) par l'intermédiaire du protocole OBD et des moyens de communication électronique (13) couplés avec le connecteur de diagnostic (11) et aptes à transmettre à un appareil électronique portable (14), par une liaison sans fil, un message indiquant l'usure dudit balai (7) lorsque les moyens (9) de détermination de l'usure du balai (7) génèrent un signal dit d'usure.

2. Dispositif selon la revendication 1 ***caractérisé* en ce que** les moyens (9) de détermination de l'usure dudit balai (7) consistent en un contrôleur (5) du véhicule connecté à l'entrée de diagnostic embarquée du véhicule.

3. Dispositif selon la revendication 1 ***caractérisé* en ce que** les moyens (9) de détermination de l'usure dudit balai (7) sont intégrés dans ledit boitier (10) et sont connectés aux moyens de communication électronique (13).

4. Dispositif selon l'une quelconque des revendications 1 à 3 ***caractérisé* en ce que** les moyens (9) de détermination de l'usure du balai (7) comprennent des moyens pour générer le signal d'usure en fonction du nombre de cycles de balayage du balai (7) d'essuie-glace.

5. Dispositif suivant l'une quelconque des revendications 1 à 3 ***caractérisé* en ce que** les moyens (9) de détermination de l'usure du balai (7) comprennent des moyens pour déduire ou estimer un coefficient de frottement entre le ou les balais (7) d'essuie-glace et la surface du pare-brise (6) et des moyens pour générer un signal d'usure en fonction dudit coefficient de frottement et du nombre de cycles de balayage du ou des balais (7) d'essuieglace.

6. Dispositif suivant l'une quelconque des revendications 1 à 5 ***caractérisé* en ce que** les moyens de communication électronique (13) consistent en un transmetteur bluetooth générant une communication selon le protocole bluetooth avec l'appareil électronique (14).

7. Dispositif suivant l'une quelconque des revendications 1 à 6 ***caractérisé* en ce que** les moyens de communication électronique (13) consistent en un transmetteur générant une communication selon le protocole IEEE 802.11p avec l'appareil électronique (14).

8. Dispositif suivant l'une quelconque des revendications 1 à 7 ***caractérisé* en ce que** les moyens de communication électronique (13) consistent en un transmetteur GSM et/ou GPRS générant une communication téléphonique avec un serveur distant.

9. Dispositif suivant l'une quelconque des revendications 1 à 8 ***caractérisé* en ce que** l'appareil électronique portable (14) consiste en un téléphone intelligent dit smartphone ou dans une tablette tactile ou similaire.

10. Dispositif suivant l'une quelconque des revendications 1 à 9 ***caractérisé* en ce que** le message transmis audit appareil électronique (14) comporte un lien hypertexte.

## Patentansprüche

1. Vorrichtung zur Fernwarnung über den Verschleißzustand von mindestens einem Wischblatt (7) einer Scheibenwischeranlage (2) eines Fahrzeugs, beinhaltend Mittel (9) zum Bestimmen des Verschleißes des Wischblatts (7) und Mittel zum Anzeigen des Verschleißes, ***dadurch gekennzeichnet*, dass** sie mindestens ein Gehäuse (10) beinhaltet, das Folgendes beinhaltet: ein Modul, das als entfernbarer Diagnoseverbinder (11) bezeichnet wird und dazu fähig ist, mit einem Diagnoseserviceverbinder (12) zusammenzuwirken, der einen On-Board-Diagnoseeingang des Fahrzeugs bildet, um mittels des OBD-Protokolls eine Verbindung mit dem Diagnoseverbinder (11) herzustellen, und elektronische Kommunikationsmittel (13), die mit dem Diagnoseverbinder (11) gekoppelt sind und dazu fähig sind, über eine drahtlose Verbindung eine Nachricht, die den Verschleiß des Wischblatts (7) angibt, an eine tragbare elektronische Einrichtung (14) zu senden, wenn die Mittel (9) zum Bestimmen des Verschleißes des Wischblatts (7) ein sogenanntes Verschleißsignal generieren.

2. Vorrichtung nach Anspruch 1, ***dadurch gekennzeichnet*, dass** die Mittel (9) zum Bestimmen des Verschleißes des Wischblatts (7) aus einer Steuereinheit (5) des Fahrzeugs bestehen, die mit dem On-Board-Diagnoseeingang des Fahrzeugs verbunden ist.

3. Vorrichtung nach Anspruch 1, ***dadurch* gekennzeichnet, dass** die Mittel (9) zum Bestimmen des Verschleißes des Wischblatts (7) in das Gehäuse (10) integriert sind und mit den elektronischen Kommunikationsmitteln (13) verbunden sind.

4. Vorrichtung nach einem der Ansprüche 1 bis 3, ***dadurch gekennzeichnet*, dass** die Mittel (9) zum Bestimmen des Verschleißes des Wischblatts (7) Mittel zum Generieren des Verschleißsignals in Abhängigkeit von der Anzahl von Wischzyklen des Scheibenwischblatts (7) beinhalten.

5. Vorrichtung nach einem der Ansprüche 1 bis 3, ***dadurch gekennzeichnet*, dass** die Mittel (9) zum Bestimmen des Verschleißes des Wischblatts (7) Mittel zum Ableiten oder Schätzen eines Reibungskoeffizienten zwischen dem einen oder den mehreren Scheibenwischblättern (7) und der Oberfläche der Windschutzscheibe (6) und Mittel zum Generieren eines Verschleißsignals in Abhängigkeit von dem Reibungskoeffizienten und der Anzahl von Wischzyklen des einen oder der mehreren Scheibenwischblätter (7) beinhalten.

6. Vorrichtung nach einem der Ansprüche 1 bis 5, ***dadurch gekennzeichnet*, dass** die elektronischen Kommunikationsmittel (13) aus einem Bluetooth-Sender bestehen, der eine Kommunikation gemäß dem Bluetooth-Protokoll mit der elektronischen Einrichtung (14) generiert.

7. Vorrichtung nach einem der Ansprüche 1 bis 6, ***dadurch gekennzeichnet*, dass** die elektronischen Kommunikationsmittel (13) aus einem Sender bestehen, der eine Kommunikation gemäß dem IEEE 802.11p-Protokoll mit der elektronischen Einrichtung (14) generiert.

8. Vorrichtung nach einem der Ansprüche 1 bis 7, ***dadurch gekennzeichnet*, dass** die elektronischen Kommunikationsmittel (13) aus einem GSM- und/oder GPRS-Sender bestehen, der eine Telefonkommunikation mit einem entfernten Server generiert.

9. Vorrichtung nach einem der Ansprüche 1 bis 8, ***dadurch gekennzeichnet*, dass** die tragbare elektronische Einrichtung (14) aus einem Smartphone oder aus einem Tablet oder ähnlichem besteht.

10. Vorrichtung nach einem der Ansprüche 1 bis 9, ***dadurch gekennzeichnet*, dass** die an die elektronische Einrichtung (14) gesendete Nachricht einen Hyperlink umfasst.

## Claims

1. Device for remotely giving warning as to the state of wear of at least one blade (7) of a windshield-wiper system (2) of a vehicle comprising means (9) for determining the wear of said blade (7) and means for flagging said wear, ***characterized* in that** it comprises at least one unit (10) comprising a module called the removable diagnostic connector (11) able to interact with a diagnostic service connector (12) forming an on-board diagnostic input of the vehicle in order to establish a link with said diagnostic connector (11) via the OBD protocol and means (13) for communicating electronically that are coupled to the diagnostic connector (11) and that are able to transmit, to a portable electronic apparatus (14), via a wireless link, a message indicating the wear of said blade (7) when the means (9) for determining the wear of the blade (7) generate a signal referred to as a wear signal.

2. Device according to Claim 1, ***characterized* in that** the means (9) for determining the wear of said blade (7) consists of a controller (5) of the vehicle connected to the on-board diagnostic input of the vehicle.

3. Device according to Claim 1, ***characterized* in that** the means (9) for determining the wear of said blade (7) are integrated into said unit (10) and are connected to the means (13) for communicating electronically.

4. Device according to any one of Claims 1 to 3, ***characterized* in that** the means (9) for determining the wear of the blade (7) comprise means for generating the wear signal depending on the number of wiping cycles of the windshield-wiper blade (7).

5. Device according to any one of Claims 1 to 3, ***characterized* in that** the means (9) for determining the wear of the blade (7) comprise means for deducing or estimating a coefficient of friction between the one or more windshield-wiper blades (7) and the surface of the windshield (6) and means for generating a wear signal depending on said coefficient of friction and on the number of wiping cycles of the one or more windshield-wiper blades (7).

6. Device according to any one of Claims 1 to 5, ***characterized* in that** the means (13) for communicating electronically consists of a Bluetooth transmitter that generates a communication according to the Bluetooth protocol with the electronic apparatus (14).

7. Device according to any one of Claims 1 to 6, ***characterized* in that** the means (13) for communicating electronically consists of a transmitter that generates a communication according to the IEEE 802.11p protocol with the electronic apparatus (14).

8. Device according to any one of Claims 1 to 7, ***characterized* in that** the means (13) for communicating electronically consists of a GSM and/or GPRS transmitter that generates a telephonic communication with a remote server.

9. Device according to any one of Claims 1 to 8, ***characterized* in that** the portable electronic apparatus (14) consists of a smartphone or in a tablet computer or the like.

10. Device according to any one of Claims 1 to 9, ***characterized* in that** the message transmitted to said electronic apparatus (14) contains a hyperlink.
